# EUROPÄISCHE PATENTSCHRIFT

(11) **EP 1 626 626 B1**
(45) Veröffentlichungstag und Bekanntmachung des Hinweises auf die Patenterteilung: **29.04.2009**
(21) Anmeldenummer: 04721151.1
(22) Anmeldetag: 17.03.2004
(51) Int. Cl.: A22C 13/00, C08J 5/18

(54) **RÄUCHERBARE FLÄCHEN- ODER SCHLAUCHFÖRMIGE NAHRUNGSMITTELHÜLLE ODER -FOLIE FÜR LEBENSMITTELVERPACKUNGEN, SOWIE VERFAHREN ZU DEREN HERSTELLUNG**
SMOKEABLE PLANAR OR TUBULAR-SHAPED FOOD COVERING OR FILM FOR FOOD PACKAGINGS, AND METHOD FOR THE PRODUCTION THEREOF
ENVELOPPE OU FEUILLE ALIMENTAIRE DE FORME PLATE OU TUBULAIRE POUVANT ETRE FUMEE, DESTINEE A DES EMBALLAGES DE PRODUITS ALIMENTAIRES, ET PROCEDE DE PRODUCTION ASSOCIE

(30) Priorität: 23.05.2003 DE 10323417
(43) Veröffentlichungstag der Anmeldung: 22.02.2006
(73) Patentinhaber: KUHNE ANLAGENBAU GmbH, D-53757 Sankt Augustin (DE)
(72) Erfinder: SCHIFFMANN, Jürgen, 53773 Hennef-Rott (DE)
(74) Vertreter: Kuhnen & Wacker
(86) Internationale Anmeldenummer: PCT/EP2004/002767
(87) Internationale Veröffentlichungsnummer: WO 2004/103079

(56) Entgegenhaltungen:
- EP-A- 0 216 094
- EP-A- 1 193 289
- WO-A2-20/04098298
- PATENT ABSTRACTS OF JAPAN Bd. 0131, Nr. 87 (C-592), 2. Mai 1989 (1989-05-02) & JP 1 013940 A (KUREHA CHEM IND CO LTD), 18. Januar 1989 (1989-01-18)

## Beschreibung

Die vorliegende Erfindung betrifft eine räucherbare flächen- oder schlauchförmige Nahrungsmittelhülle oder -folie für Lebensmittelverpackungen, wie beispielsweise Wursthüllen oder Schrumpfbeutel, auf Polymerbasis, nach dem Oberbegriff des Anspruchs 1, sowie ein Verfahren zu deren Herstellung, nach dem Oberbegriff des Anspruchs 12.

Räucherbare Wursthüllen sind aus der Praxis und dem Schrifttum bekannt. So lehrt die DE 199 42 835 A1 eine Wursthülle aus einem künstlichen Wursthüllenmaterial, wobei hierfür ein gas- und sauerstoffdurchlässiges, weiches Kunststoffmaterial Verwendung finden soll. Das in der DE 199 42 835 A1 beschriebene Wursthüllenmaterial weist eine unregelmäßig gekrümmte Wurstform mit geschweißten Längsnähten auf. Diese Wursthülle soll räucherbar sein und hierzu eine ausreichend hohe Festigkeit aufweisen.

Weiterhin ist aus der DE 198 30 389 A1 eine Folie für lufttrocknende, räucherbare Lebensmittel bekannt. Ferner beschreibt die DE 101 25 762 A1 ein Formteil mit einer unregelmäßigen äußeren Kontur, das aus einer doppelt gelegten Folienmaterialbahn aus einem schweißbaren Kunststoff in einer die Materialbahnen verschweißenden und abtrennenden Trennschweißvorrichtung hergestellt wird. Dieses trenngeschweißte Formteil soll eine räucherbare Wursthülle ergeben, die eine ausreichend hohe Festigkeit aufweisen soll.

Des weiteren ist in der DE 35 26 394 C2 eine Rohwursthülle beschrieben, die aus einem in Längsrichtung zu einem Schlauch zusammengefügten, bindemittelfreien Spinnwirrvlies aus wenigstens einem Polyamid hergestellt sein soll. Diese Rohwursthülle soll räucherbar sein. Dabei wird in der DE 35 26 394 C2 auch auf die DE 30 29 028 A1 verwiesen, die eine faservliesverstärkte Kunstdarmhülle offenbart, welche räucherbar sein soll. Das hierfür verwendete Faservlies kann auf Polyamidbasis gebildet sein. Besonders geeignet seien Spinnvliese auf Basis von Polyamid und Polypropylen. Derartige Spinnvliese sind mit einer Beschichtungslösung zu imprägnieren. Als Beschichtungsmaterialien wiederum eignen sich gemäß der DE 30 29 028 A1 alle filmbildenden Polymere, die als Pulver aufgestäubt und anschließend thermisch zu einem Film verschmolzen oder als Beschichtung in Form einer Schmelze-Lösung, Suspension oder Dispersion aufgebracht und durch eine anschließende Trocknung verfilmt werden können. Dabei würden sich unter anderem als Beschichtungsmaterialien molekulardisperse oder kolloidale Lösungen bzw. Suspensionen verschiedener Polymere allein oder in Mischungen, wie beispielsweise Polyvinylakohol, eignen.

Schließlich offenbart die DE 42 20 957 A1 eine Verpackungshülle mit einem flexiblen Trägermaterial, welches mit einer Schaumschicht versehen ist. Als Beschichtungsmaterial soll hierfür vollverseifter Polyvinylalkohol Verwendung finden. Der Schaum dieser Substanz sei wasserfest, fettdicht und für Sauerstoff, Stickstoff und Kohlendioxid im wesentlichen undurchlässig. Lediglich Wasserdampf könne ungehindert durch die Schaumschicht aus vollverseiftem Polyvinylalkohol durchdringen. Vollverseifter Polyvinylalkohol sei daher für Wursthüllen insbesondere für Rohwürste geeignet. Auch seien Kombinationen mit Polyvinylakohol mit anderen Kunststoffdispersionen denkbar.

Damit sind aus dem Stand der Technik zwar räucherbare Nahrungsmittelhüllen auf Polyamidbasis mit Polyvinylalkohol bekannt. Diese bekannten räucherbaren Nahrungsmittelhüllen müssen jedoch auf Faser- oder Spinnvliese, Netze oder andere Träger- bzw. Stützmaterialien zurückgreifen, auf welche dann Beschichtungen aufgetragen werden. Derlei bekannte räucherbare Wursthüllen können nicht großtechnisch hergestellt werden. Sie sind zudem für die maschinelle Weiterverarbeitung beispielsweise in Großmetzgereien aufgrund deren geringer Steifigkeit und damit geringer Raffbarkeit sowie einer in aller Regel unbefriedigenden Formstabilität nicht geeignet.

Das Dokument WO 2004/098298 A2 offenbart eine ein- oder mehrschichtige, schlauchförmige, unverstreckte, mono- oder biaxial orientierte (und thermofixierte) Nahrungsmittelhülle aus einem thermoplastischen Gemisch, das mindestens ein aliphatisches Polyamid und/oder Copolyamid und mindestens ein oder mehrere synthetische wasserlösliche Polymere und mindestens einen organischen und/oder anorganischen Füllstoff umfasst. Weiterhin werden als Füllstoffe insbesondere "Maisstärke", "Cellulosepulver" und "Mikroglaskugeln" genannt.

Vorstehend diskutiertes Dokument WO 2004/098298 A2 fällt unter Art. 54(3) EPÜ. Gegenüber diesem Dokument ist der erfindungsgemäße Gegenstand durch den Disclaimer "...die Kunststoff-Mischung keine Füllstoffe, ausgewählt aus der Gruppe, bestehend aus Maisstärke, Cellulosepulver und Mikroglaskugeln, enthält" abgegrenzt.

Aufgabe der vorliegenden Erfindung ist es daher, eine räucherbare flächen- oder schlauchförmige Nahrungsmittelhülle oder -folie für Lebensmittelverpackungen vorzuschlagen, die in großen Mengen kostengünstig aus einer Kunststoff-Schmelze in industrieller Massenproduktion hergestellt werden kann, die nachfolgend maschinell weiterverarbeitbar ist, sowie ein hierfür geeignetes Verfahren anzugeben.

Diese Aufgabe wird gelöst durch die Merkmale des Anspruchs 1 als auch durch die Merkmale des Anspruchs 12.

Dabei wird eine räucherbare flächen- oder schlauchförmige Nahrungsmittelhülle oder -folie für Lebensmittelverpackungen, wie beispielsweise Wursthüllen oder Schrumpfbeutel, auf Polymerbasis, vorgeschlagen, die erstmals im Düsenblasverfahren aus einer homogenen Kunststoff-Schmelze aus einer Kunststoff-Mischung zumindest aus PA (Polyamid) mit PVAL (Polyvinylalkohol) und PEBA (Polyätherblockamid) gebildet ist. Dabei weist die Kunststoff-Mischung einen Anteil an PA (Polyamid) oder einer Mischung von Polyamiden von 40 Gew.-% bis 75 Gew.-% auf. Der Anteil an PVAL (Polyvinylalkohol) beträgt von 5 Gew.-% bis 40 Gew.-% und der Anteil an PEBA (Polyätherblockamid) liegt zwischen 20 Gew.-% und 30 Gew.-%. Ferner enthält die Kunststoff-Mischung keine Füllstoffe, ausgewählt aus der Gruppe, bestehend aus Maisstärke, Cellulosepulver und Mikroglaskugeln.

Darüber hinaus weist die im Düsenblasverfahren hergestellte räucherbare Nahrungsmittelhülle oder -folie eine Wasserdampf-Permeabilität auf, die wenigstens 1 kg/m² innerhalb 24 h beträgt. Die Sauerstoffdurchlässigkeit liegt innerhalb 24 h bei einer Folienstärke von 30 µm unter 2,1 cm³/m².

Damit wird in vorteilhafter Weise nicht nur die großtechnische Herstellung von räucherbaren flächen- oder schlauchförmigen Nahrungsmittelhüllen oder -folien für Lebensmittelverpackungen erstmals im Düsenblasverfahren ermöglicht, sondern es kann gänzlich auf die aus dem Stand der Technik als besonders nachteilig in der Großserienfertigung empfundenen Netze, flexiblen Trägermaterialien oder Spinnwirrvliese verzichtet werden, die gerade im Falle von Faser- oder Spinnvliesen häufig zudem aufwändig verdichtet werden mußten oder ganz allgemein aufwändig zu beschichten waren, ohne daß deren geringe Steifigkeit damit hätte ausreichend erhöht werden können, was das Raffen stark erschwerte und insbesondere ein netzloses Raffen von kleinen Kalibern schlichtweg unmöglich machte. Demzufolge waren derlei bekannte Wursthüllen nicht maschinell weiterverarbeitbar und sind es bis heute geblieben.

Demgegenüber weist die erfindungsgemäße räucherbare flächen- oder schlauchförmige Nahrungsmittelhülle oder -folie eine hervorragende Festigkeit bzw. Steifigkeit und damit Raffbarkeit auf, und ist damit erstmals maschinell weiterverarbeitbar. Zudem verfügt sie zugleich über eine gute Wasserdurchlässigkeit bei gleichzeitig hoher Sauerstoffbarriere, selbst bei extrem geringen Folienstärken, so daß zudem erstmals besonders dünne Folien herstellbar sind, was dem nachfolgenden Räuchern und ggf. Lufttrocknen bei Hartwürsten oder Salamis förderlich ist.

Hierbei zeichnet sich die erfindungsgemäße räucherbare flächen- oder schlauchförmige Nahrungsmittelhülle oder -folie durch eine besonders gute Raffbarkeit aus, die selbst bei kleinen Kalibern mit einem Durchmesser von unter 30 mm ein Verhältnis von gestreckter zu geraffter Länge von wenigstens 100 m im gestreckten Zustand und 20 cm in gerafftem Zustand zuläßt. Zugleich weist die erfindungsgemäße Hülle oder Folie eine sehr gute Formbeständigkeit auf, so daß damit hergestellte Fleisch- oder Wurstwaren nach entsprechenden Räucherschritten und ggf. auch länger ausgedehnten Lufttrocknungsphasen eine gewünschte, von der Wursthülle vorgeprägte Form besonders gut einhalten können.

Die hierbei erzielbare, extrem hohe Sauerstoffbarriere von weniger als 2,1 cm³/m² innerhalb 24 h bereits bei einer Folienstärke von lediglich 30 µm führt nicht nur zu einer besonders guten Räucherbarkeit von in solchen erfindungsgemäßen Nahrungsmittelhüllen oder -folien hergestellten Fleisch- oder Wurstwaren, sondern die erfindungsgemäße Nahrungsmittelhülle oder -folie ist zugleich besonders geschmeidig bzw. weich, damit wesentlich besser maschinell verarbeitbar, so daß sie nicht nur großserientechnisch hergestellt sondern auch dementsprechend gut in Großmetzgerein unter großindustriellen Bedingungen zum Einsatz gelangen kann. Zudem ist die erfindungsgemäße räucherbare Nahrungsmittelhülle oder -folie besonders gut für Rohwürste, wie beispielsweise Salami, geeignet und liegt dabei auch dann faltenfrei an, wenn das Brät alternativ ggf. auch manuell, d.h. ohne oder mit nur geringem Druck abgefüllt wurde, also ohne Verwendung von speziellen Füllmaschinen.

Dabei kann die erfindungsgemäße räucherbare flächen- oder schlauchförmige Nahrungsmittelhülle oder -folie in vorteilhafter Weise Folienstärken von 10 µm bis 50 µm aufweisen, wobei im Düsenblasverfahren besonders gut Folienstärken von 20 µm bis 40 µm bei Kalibern von bis zu 150 mm Durchmesser herstellbar sind.

Mit der erfindungsgemäßen räucherbaren flächen- oder schlauchförmigen Nahrungsmittelhülle oder -folie für Lebensmittelverpackungen hergestellte Fleisch- oder Wurstwaren, wie beispielsweise Rohwürste und insbesondere Salami sind dabei hervorragend räucherbar und können besonders gut luftgetrocknet werden.

Die gewählte Kunststoff-Mischung aus 40 Gew.-% bis 75 Gew.-% PA (Polyamid), 5 Gew.-% bis 40 Gew.-% PVAL (Polyvinylalkohol) und 20 Gew.-% bis 30 Gew.-% PEBA (Polyätherblockamid) ermöglicht erstmals die besonders gute Herstellung einer räucherbaren flächen- oder schlauchförmigen Nahrungsmittelhülle oder -folie im Düsenblasverfahren, die dabei zum ersten Mal allen Anforderungen einer räucherbaren Wursthülle beispielsweise für Hot Dogs oder für Salami gerecht wird. Dabei wird mit der Wursthülle oder Lebensmittelfolie eine maximale Wasserdampf- und Rauchdurchlässigkeit erzielt, wobei gerade die Rauchdürchlässigkeit für den Räucherprozeß von Bedeutung ist. Zugleich wird eine möglichst hohe Steifigkeit erzielt, die für einen guten Raffprozeß entscheidend ist. Die für einen optimalen Füllprozeß geforderte gute Formstabilität wird mit dieser Wursthülle oder Lebensmittelfolie ebenfalls erzielt. Selbst die geforderte geringe Bräthaftung und gute Schälbarkeit, die sich auf die späteren Verarbeitungsprozesse auswirken, sind mit der erfindungsgemäßen Lebensmittelfolie oder Wursthülle problemlos erzielbar. Schließlich wird auch die gewünschte hohe Oberflächenfärbung der Wurstwaren, die das typische optische Erscheinungsbild von geräucherten Wurstwaren ausmacht, mit der erfindungsgemäßen Lebensmittelfolie oder Wursthülle eingehalten.

Verschiedene Untersuchungen und Tests mit der neuen Lebensmittelfolie oder Wursthülle haben dabei verschiedene Trends erkennen lassen. So ist für eine gute Formstabilität und Steifigkeit im wesentlichen ein hoher Anteil an PA (Polyamid) erforderlich. Allerdings steht der hohe Anteil an PA (Polyamid) in einem Zielkonflikt mit der gewünschten Rauchdurchlässigkeit, der Oberflächenfärbung und der Bräthaftung. Denn ein hoher Anteil an PA (Polyamid) verringert die Rauchdurchlässigkeit sowie die Oberflächenfärbung und bringt gleichzeitig eine möglicherweise höhere Bräthaftung mit sich, als gewünscht.

Weiterhin zeigte sich, daß durch Zugabe von PEBA (Polyätherblockamid) die Wasserdampf- und Rauchdurchlässigkeit stark verbessert und zugleich die Schälbarkeit entscheidend optimiert werden kann. Dabei läßt sich jedoch die gewünschte hohe Wasserdampf- und Rauchdurchlässigkeit alleine durch die Zugabe von PEBA (Polyätherblockamid) noch nicht abschließend einstellen. Auch die Oberflächenfärbung läßt sich alleine durch die Zugabe von PEBA (Polyätherblockamid) noch nicht voll befriedigend abstimmen. Zudem können sich die Formstabilität und die Steifigkeit durch eine fehlerhaft dosierte Zugabe von PEBA (Polyätherblockamid) verschlechtern, so daß man diesbezüglich vor einem weiteren Zielkonflikt steht.

Dabei zeigte sich jedoch überraschend, daß durch die Mischung von PVAL bzw. PVOH (Polyvinylalkohol) mit PEBA (Polyätherblockamid) und PA (Polyamid) erstmals eine Kunststoff-Mischung geschaffen werden konnte, die bei erfindungsgemäßer Auswahl bzw. Dosierung der Mischungsanteile die gewünschte hohe Wasserdampf- und Rauchdurchlässigkeit ergibt sowie eine hohe Oberflächeneinfärbung garantiert. Darüber hinaus wird eine wesentlich höhere Steifigkeit erzielt und die Bräthaftung weiter verringert. Die Formstabilität bleibt bei der erfindungsgemäßen Kunststoff-Mischung zudem optimal einstellbar.

Weitere vorteilhafte Weiterbildungen und Aspekte der Erfindung ergeben sich aus den Merkmalen der Unteransprüche.

Einer bevorzugten Ausführungsform der räucherbaren Nahrungsmittelhülle oder - folie für Lebensmittelverpackungen zufolge beträgt der Anteil an PA (Polyamid) von 45 bis 75 Gew.-%, vorzugsweise von 50 bis 65 Gew.-%. Der Anteil an PVAL (Polyvinylalkohol) liegt zwischen 10 und 35 Gew.-%, vorzugsweise zwischen 15 bis 25 Gew.-%. Dementsprechend beträgt der Anteil an PEBA (Polyätherblockamid) von 23 bis 27 Gew.-%, vorzugsweise von 24 bis 26 Gew.-%. Die damit angegebenen Mischungsverhältnisse ergeben eine besonders gute Lebensmittelfolie oder Wursthülle.

So ist in einer bevorzugten Ausführungsform der räucherbaren Nahrungsmittelhülle oder -folie für Lebensmittelverpackungen vorgesehen, daß deren Sauerstoffdurchlässigkeit bei einer Folienstärke von 30 µm im Bereich von 2,1 cm³/m² bis 1,0 cm³/m², vorzugsweise von 1,0 cm³/m² bis 0,26 cm³/m², besonders bevorzugt weniger als 0,26 cm³/m² innerhalb 24 h beträgt.

In einer weiter bevorzugten Ausführungsform ist vorgesehen, daß die Wasserdampfpermeabilität von wenigstens 1 kg/m² bis 100 kg/m² beträgt, wobei diese in bevorzugter Weise wenigstens 10 kg/m² bis 50 kg/m² und besonders bevorzugt zwischen 20 kg/m² und 30 kg/m² innerhalb 24 h betragen soll.

Des weiteren ist vorgesehen, daß zum Räuchern natürlicher Rauch oder flüssiger Rauch verwendbar ist. Die erfindungsgemäße Hülle oder Folie kann je nach Bedarf und Verwendungszweck sowie abhängig von den Anforderungen bei den nachfolgenden Verarbeitungsschritten unverstreckt, uni-direktional verstreckt oder bi-direktional verstreckt hergestellt werden. Die erfindungsgemäße Hülle oder Folie kann je nach Wunsch ein- oder mehrschichtig ausgebildet werden.

Die vorstehend diskutierte Aufgabe wird verfahrenstechnisch durch die Merkmale des Anspruchs 12 gelöst, wobei die vorstehend diskutierten Vorteile und Ziele in synergetischer Weise erreichbar sind.

Die nachfolgend wiedergegebene Tabelle enthält auszugsweise insgesamt 15 in Tests im Hause der Anmelderin erfolgreich untersuchte, bevorzugte Kunststoff-Mischungen, wobei die Mischungsanteile jeweils in Gew.-% angegeben sind.

| Nr. | PA 6.66 | PVAL | PEBA |
|---|---|---|---|
| 1 | 5033 FDX | Mowiflex-L745 | MH 1657 |
| | 65 Gew.-% | 10 Gew.-% | 25 Gew.-% |
| 2 | 5033 FDX | Mowiflex-L745 | MH 1657 |
| | 55 Gew.-% | 20 Gew.-% | 25 Gew.-% |
| 3 | 5033 FDX | Mowiflex-L 745 | MH 1657 |
| | 50 Gew.-% | 25 Gew.-% | 25 Gew.-% |
| 4 | 5033 FDX | Mowiflex-L 745 | MH 1657 |
| | 45 Gew.-% | 30 Gew.-% | 25 Gew.-% |
| 5 | 5033 FDX | Mowiflex-L 745 | MH 1657 |
| | 40 Gew.-% | 35 Gew.-% | 25 Gew.-% |
| 6 | 5033 FDX | Mowiflex-L745 | MH 1657 |
| | 60 Gew.-% | 18 Gew.-% | 22 Gew.-% |
| 7 | 5033 FDX | Mowiflex-L745 | MH 1657 |
| | 53 Gew.-% | 20 Gew.-% | 27 Gew.-% |
| 8 | 5033 FDX | Mowiol 8-88 | MH 1657 |
| | 55 Gew.-% | 20 Gew.-% | 25 Gew.-% |
| 9 | 5033 FDX | Mowiol 8-88 | MH 1657 |
| | 50 Gew.-% | 25 Gew.-% | 25 Gew.-% |
| 10 | 5033 FDX | Mowiol 8-88 | MH 1657 |
| | 60 Gew.-% | 18 Gew.-% | 22 Gew.-% |
| 11 | 5033 FDX | Mowiol 8-88 | MH 1657 |
| | 50 Gew.-% | 22 Gew.-% | 28 Gew.-% |
| 12 | 5033 FDX | Poval OV 170 | MH 1657 |
| | 70 Gew.-% | 5 Gew.-% | 25 Gew.-% |
| 13 | 5033 FDX | Poval OV 170 | MH 1657 |
| | 65 Gew.-% | 10 Gew.-% | 25 Gew.-% |
| 14 | 5033 FDX | Poval OV 170 | MH 1657 |
| | 63 Gew.-% | 12 Gew.-% | 25 Gew.-% |
| 15 | 5033 FDX | Poval OV 170 | MH 1657 |
| | 58 Gew.-% | 15 Gew.-% | 27 Gew.-% |

Diese bevorzugten und weitere Kunststoff-Mischungen wurden im Hause der Anmelderin einer Mehrzahl von Untersuchungen und Testreihen unterworfen, um für die erfindungsgemäße räucherbare flächen- oder schlauchförmige Nahrungsmittelhülle oder -folie für Lebensmittelverpackungen, wie beispielsweise Wursthüllen oder Schrumpfbeutel, die für optimale Ergebnisse auszuwählende Kunststoff-Mischung (aus der dann die Folie im Düsenblasverfahren aus der daraus gewonnenen Kunststoff-Schmelze hergestellt wird) bestimmen und die damit erzielbaren Eigenschaften feststellen zu können.

Die vorstehend diskutierten Aspekte und Vorteile der vorliegenden Erfindung lassen sich unter Ausnutzung weiterer Synergieeffekte am besten auf einer Vorrichtung bzw. Anlage der selben Anmelderin zur Herstellung von schlauchförmigen Nahrungsmittelhüllen oder -folien für Lebensmittelverpackungen, wie beispielsweise Wursthüllen, im Düsenblasverfahren erzielen, wenn man dabei zusätzlich die in der Offenlegungsschrift DE 199 16 428 A1 der selben Anmelderin offenbarte Einrichtung zum raschen Abkühlen dünner thermoplastischer Schläuche nach deren Extrusion einsetzt, bzw. die Weiterentwicklung hierzu gemäß Offenlegungsschrift DE 100 48 178 A1. Dabei wird die im Düsenblaskopf aus der Kunstostoffschmelze erzeugte schlauchförmige Folie einer intensiven Kühlung unterworfen, bei der die amorphe Struktur des Thermoplasten aus der Kunststoffschmelze erhalten bleibt. Die im Düsenblaskopf aus der Kunststoffschmelze vertikal extrudierte schlauchförmige Folie wandert zunächst ohne Wandberührung zur Abkühlung in die Kühlvorrichtung, wie dies im Detail in der DE 199 16 428 A1 wie auch in der DE 100 48 178 A1 beschrieben ist. Wegen Einzelheiten der Verfahrensweisen, des Aufbaus und der Funktionsweise dieser auch als Kalibriereinrichtung bezeichneten Kühleinrichtung wird zur Vermeidung von Wiederholungen ausdrücklich auf den Inhalt der DE 199 16 428 A1 und der DE 100 48 178 A1 vollinhaltlich Bezug genommen. Die schlauchförmige Folie durchläuft danach in der Kühleinrichtung Abstützungen, gegen die sich die Folie infolge eines Differenzdrucks zwischen dem Inneren der schlauchförmigen Folie und dem Kühlmittel abstützt, wobei ein Flüssigkeitsfilm zwischen Folie und Abstützungen erhalten bleibt, so daß ein Ankleben der schlauchförmigen Folie ausgeschlossen ist. Der Durchmesser der Abstützungen nimmt dabei Einfluß auf den Durchmesser der schlauchförmigen Folie, weshalb diese Kühleinrichtung der selben Anmelderin auch als Kalibriereinrichtung bezeichnet wird. Hierbei lassen sich die vorstehend diskutierten Aspekte und Vorteile am besten in Kombination der Kunststoffmischung aus Polyamid mit PVAL (Polyvinylalkohol) und PEBA (Polyätherblockamid) im Zusammenspiel mit dem Düsenblasverfahren und der nachfolgenden raschen, intensiven Abkühlung mit der hier diskutierten Kalibriereinrichtung erzielen.

Die vorliegende Erfindung schafft damit erstmals eine räucherbare Flächen- oder schlauchförmige Nahrungsmittelhülle oder -folie für Lebensmittelverpackungen, wie beispielsweise Wursthüllen oder Schrumpfbeutel, auf Polymerbasis, die im Düsenblasverfahren aus einer homogenen Kunststoff-Schmelze aus einer Mischung zumindest aus Polyamid mit PVAL (Polyvinylalkohol) und PEBA (Polyätherblockamid) hergestellt werden kann. Dabei weist die erfindungsgemäße Nahrungsmittelhülle oder - folie erstmals eine Wasserdampf-Permeabilität auf, die innerhalb 24 h wenigstens 1 kg/m² beträgt und die zugleich über eine Sauerstoffdurchlässigkeit verfügt, die bei einer Folienstärke von 30 µm < 2,1 cm³/m² innerhalb 24 h liegt. Ferner schlägt die vorliegende Erfindung erstmals ein Verfahren zu deren Herstellung vor.

## Patentansprüche

1. Räucherbare flächen- oder schlauchförmige Nahrungsmittelhülle oder -folie für Lebensmittelverpackungen, wie beispielsweise Wursthüllen oder Schrumpfbeutel, auf Polymerbasis,
**dadurch gekennzeichnet, daß**
die räucherbare Nahrungsmittelhülle oder -folie im Düsenblasverfahren aus einer homogenen Kunststoff-Schmelze aus einer Kunststoff-Mischung zumindest aus PA (Polyamid) mit PVAL (Polyvinylalkohol) und PEBA (Polyätherblockamid) gebildet ist, wobei die Kunststoff-Mischung
- einen Anteil an PA (Polyamid) oder einer Mischung von Polyamiden von 40 bis 75 Gew.-%,
- einen Anteil an PVAL (Polyvinylalkohol) von 5 bis 40 Gew.-%, und
- einen Anteil an PEBA (Polyätherblockamid) von 20 bis 30 Gew.-%
aufweist, und wobei die Kunststoff-Mischung keine Füllstoffe, ausgewählt aus der Gruppe, bestehend aus Maisstärke, Cellulosepulver und Mikroglaskugeln, enthält.

2. Räucherbare Nahrungsmittelhülle oder -folie für Lebensmittelverpackungen nach Anspruch 1, **dadurch gekennzeichnet, daß** der Anteil an PA (Polyamid) von 45 bis 75 Gew.-%, vorzugsweise von 50 bis 65 Gew.-% beträgt.

3. Räucherbare Nahrungsmittelhülle oder -folie für Lebensmittelverpackungen nach Anspruch 1, **dadurch gekennzeichnet, daß** der Anteil an PVAL (Polyvinylalkohol) von 10 bis 35 Gew.-%, vorzugsweise von 15 bis 25 Gew.-%, beträgt.

4. Räucherbare Nahrungsmittelhülle oder -folie für Lebensmittelverpackungen nach Anspruch 1, **dadurch gekennzeichnet, daß** der Anteil an PEBA (Polyätherblockamid) von 23 bis 27 Gew.-%, vorzugsweise von 24 bis 26 Gew.-% beträgt.

5. Räucherbare Nahrungsmittelhülle oder -folie für Lebensmittelverpackungen nach einem der Ansprüche 1 bis 4, **dadurch gekennzeichnet, daß** sie eine Wasserdampf-Permeabilität aufweist, die innerhalb von 24 h wenigstens 1 kg/m² beträgt.

6. Räucherbare Nahrungsmittelhülle oder -folie für Lebensmittelverpackungen nach einem der Ansprüche 1 bis 5, **dadurch gekennzeichnet, daß** sie eine Wasserdampf-Permeabilität aufweist, die innerhalb 24 h weniger als 100 kg/m² beträgt.

7. Räucherbare Nahrungsmittelhülle oder -folie für Lebensmittelverpackungen nach einem der Ansprüche 1 bis 6, **dadurch gekennzeichnet, daß** sie eine Wasserdampf-Permeabilität aufweist, die innerhalb von 24 h wenigstens 10 kg/m² bis 50 kg/m² beträgt, besonders bevorzugt zwischen 20 kg/m² und 30 kg/m² beträgt.

8. Räucherbare Nahrungsmittelhülle oder -folie für Lebensmittelverpackungen nach einem der Ansprüche 1 bis 7, **dadurch gekennzeichnet, daß** sie eine Sauerstoffdurchlässigkeit aufweist, die bei einer Folienstärke von 30 µm kleiner als 2,1 cm³/m² innerhalb 24 h ist.

9. Räucherbare Nahrungsmittelhülle oder -folie für Lebensmittelverpackungen nach einem der Ansprüche 1 bis 8, **dadurch gekennzeichnet, daß** sie eine Sauerstoffdurchlässigkeit bei einer Folienstärke von 30 µm aufweist, die innerhalb 24 h im Bereich von 2,1 cm³/m² bis 1,0 cm³/m² vorzugsweise von 1,0 cm³/m² bis 0,26 cm³/m², besonders bevorzugt weniger als 0,26 cm³/m² beträgt.

10. Räucherbare Nahrungsmittelhülle oder -folie für Lebensmittelverpackungen nach einem der Ansprüche 1 bis 9, **dadurch gekennzeichnet, daß** die Polyamide aus einer Gruppe ausgewählt sind, umfassend: Polycaprolactam (PA 6), Polyhexamethylenadipinamid (PA 66), PA 6/66, PA 11, PA 12, PA 6.12, PA 6/12, PA 6/69, MXD6 (modifiziertes Polyamid 6), oder Mischungen aus diesen Polyamiden oder dergleichen.

11. Räucherbare Nahrungsmittelhülle oder -folie für Lebensmittelverpackungen nach einem der Ansprüche 1 bis 10 **dadurch gekennzeichnet, daß** die Hülle oder Folie ein- oder mehrschichtig ist.

12. Verfahren zur Herstellung von räucherbaren flächen- oder schlauchförmigen Nahrungsmittelhüllen oder -folien für Lebensmittelverpackungen, wie beispielsweise Wursthüllen oder Schrumpfbeutel, auf Polymerbasis, zur Verwendung bei der Erzeugung räucherbarer Wurst- oder Fleischwaren, wobei die Wurst- oder Fleischmasse vor dem Räuchern in die räucherbare Hülle oder Folie eingefüllt wird,
**dadurch gekennzeichnet, daß**
die räucherbare Nahrungsmittelhülle oder -folie im Düsenblasverfahren aus einer homogenen Kunststoff-Schmelze aus einer Kunststoff-Mischung zumindest aus PA (Polyamid) mit PVAL (Polyvinylalkohol) und PEBA (Polyätherblockamid) hergestellt wird, wobei die Kunststoff-Mischung so eingestellt wird, daß diese
- einen Anteil an PA (Polyamid) oder einer Mischung von Polyamiden von 40 bis 75 Gew.-%,
- einen Anteil an PVAL (Polyvinylalkohol) von 5 bis 40 Gew.-%, und
- einen Anteil an PEBA (Polyätherblockamid) von 20 bis 30 Gew.-%
aufweist, und wobei die Kunststoff-Mischung keine Füllstoffe, ausgewählt aus der Gruppe, bestehend aus Maisstärke, Cellulosepulver und Mikroglaskugeln, enthält.

13. Verfahren nach Anspruch 12, **dadurch gekennzeichnet, daß** das Düsenblasverfahren derart durchgeführt wird, daß die Nahrungsmittelhülle oder -folie eine Wasserdampf-Permeabilität innerhalb von 24 h aufweist, die wenigstens 1 kg/m² beträgt, und daß sie eine Sauerstoffdurchlässigkeit aufweist, die innerhalb 24 h bei einer Folienstärke von 30 µm kleiner als 2,1 cm³/m² ist.

14. Verfahren nach Anspruch 12 oder 13, **dadurch gekennzeichnet, daß** die räucherbare Wurst- oder Fleischware in der räucherbaren Hülle oder Folie mit natürlichem Rauch oder flüssigem Rauch geräuchert wird.

15. Verfahren nach einem der Ansprüche 12 bis 14, **dadurch gekennzeichnet, daß** die räucherbare Wurst- oder Fleischware in der räucherbaren Hülle oder Folie luftgetrocknet wird.

## Claims

1. A smokable sheet- or tube-shaped food casing or food film for food packagings, such as, e.g., sausage casings, shrink bags or the like, on a polymer basis,
**characterized in that**
the smokable food casing or food film is formed in the nozzle blast drawing process from a homogeneous plastic melt consisting of a plastic mixture consisting at least of PA (polyamide) with PVAL (polyvinyl alcohol) and PEBA (polyether block amide), wherein the plastic mixture comprises
- a portion of PA (polyamide) or of a mixture of polyamides of 40 to 75 % (wt.),
- a portion of PVAL (polyvinyl alcohol) of 5 to 40 % (wt.), and
- a portion of PEBA (polyether block amide) of 20 to 30 % (wt.),
and wherein the plastic mixture does not contain any filler material, selected from the group, consisting of corn starch, cellulose powder and micro glass beads.

2. The smokable food casing or food film for food packagings in accordance with claim 1, **characterized in that** the portion of PA (polyamide) is from 45 to 75 % (wt.), preferably from 50 to 65 % (wt.).

3. The smokable food casing or food film for food packagings in accordance with claim 1, **characterized in that** the portion of PVAL (polyvinyl alcohol) is from 10 to 35 % (wt.), preferably from 15 to 25 % (wt.).

4. The smokable food casing or food film for food packagings in accordance with claim 1, **characterized in that** the portion of PEBA (polyether block amide) is from 23 to 27 % (wt.), preferably from 24 to 26 % (wt.).

5. The smokable food casing or food film for food packagings in accordance with any one of claims 1 to 4, **characterized in that** it has a water vapor permeability that is at least 1 kg/m² within 24 hrs.

6. The smokable food casing or food film for food packagings in accordance with any one of claims 1 to 5, **characterized in that** it has a water vapor permeability that is less than 100 kg/m² within 24 hrs.

7. The smokable food casing or food film for food packagings in accordance with any one of claims 1 to 6, **characterized in that** it has a water vapor permeability that is at least 10 kg/m² to 50 kg/m² within 24 hrs, in a particularly preferred manner between 20 kg/m² and 30 kg/m².

8. The smokable food casing or food film for food packagings in accordance with any one of claims 1 to 7, **characterized in that** it has an oxygen permeability of less than 2.1 cm³/m² within 24 hrs at a film thickness of 30 µm.

9. The smokable food casing or food film for food packagings in accordance with any one of claims 1 to 8, **characterized in that** it has an oxygen permeability within 24 hrs at a film thickness of 30 µm in the range from 2.1 cm³/m² to 1.0 cm³/m², preferably from 1.0 cm³/m² to 0.26 cm³/m², in a particularly preferred manner of less than 0.26 cm³/m².

10. The smokable food casing or food film for food packagings in accordance with any one of claims 1 to 9, **characterized in that** the polyamides are selected from a group comprising: polycaprolactam (PA 6), polyhexamethylene adipinamide (PA 66), PA 6/66, PA 11, PA 12, PA 6.12, PA 6/12, PA 6/69, MXD6 (modified polyamide 6), or mixtures of these polyamides or the like.

11. The smokable food casing or food film for food packagings in accordance with any one of claims 1 to 10, **characterized in that** the casing or film has a single-layer or multilayer form.

12. A method for manufacturing smokable sheet- or tube-shaped food casings or food films for food packagings, such as, e.g., sausage casings, shrink bags or the like, on polymer basis, for use in the production of smokable sausage products or meat products, wherein the sausage mass or meat mass is filled into the smokable casing or film prior to smoking,
**characterized in that**
the smokable food casing or food film is manufactured in the nozzle blast drawing process from a homogeneous plastic melt consisting of a plastic mixture consisting at least of PA (polyamide) with PVAL (polyvinyl alcohol) and PEBA (polyether block amide), wherein the plastic mixture is adjusted such that it comprises
- a portion of PA (polyamide) or of a mixture of polyamides from 40 to 75 % (wt.),
- a portion of PVAL (polyvinyl alcohol) from 5 to 40 % (wt.), and
- a portion of PEBA (polyether block amide) from 20 to 30 % (wt.),
and wherein the plastic mixture does not contain any filler material, selected from the group, consisting of corn starch, cellulose powder and micro glass beads.

13. The method in accordance with claim 12, **characterized in that** the nozzle blast drawing process is performed such that the food casing or food film has a water vapor permeability that is at least 1 kg/m² within 24 hrs, and that it has an oxygen permeability that is less than 2.1 cm³/m² within 24 hrs at a film thickness of 30 µm.

14. The method in accordance with claim 12 or 13, **characterized in that** the smokable sausage product or meat product is cured in the smokable casing or film with natural smoke or liquid smoke.

15. The method in accordance with any one of claims 12 to 14, **characterized in that** the smokable sausage product or meat product is air-dried in the smokable casing or film.

## Revendications

1. Enveloppe ou feuille alimentaire de forme plate ou tubulaire pouvant être fumée, destinée à des emballages de produits alimentaires, comme, par exemple, des enveloppes pour saucisses ou des sacs rétractables, à base de polymère,
**caractérisée en ce que**
l'enveloppe ou la feuille alimentaire pouvant être fumée est formée dans un procédé d'extrusion par jet d'air à partir d'une fonte de plastique homogène issue d'un mélange de plastiques constitué au moins de PA (polyamide) avec du PVAL (alcool polyvinylique) et du PEBA (amide à bloc polyéther), où le mélange de plastiques contient
- une proportion de PA (polyamide) ou un mélange de polyamides de 40 à 75 % en poids,
- une proportion de PVAL (alcool polyvinylique) de 5 à 40 % en poids, et
- une proportion de PEBA (amide à bloc polyéther) de 20 à 30 % en poids,
et où le mélange de plastiques ne contient aucune charge, choisie dans le groupe constitué par l'amidon de maïs, la poudre de cellulose et les microbilles de verre.

2. Enveloppe ou feuille alimentaire pouvant être fumée, destinée à des emballages de produits alimentaires, selon la revendication 1, **caractérisée en ce que** la proportion de PA (polyamide) est de 45 à 75 % en poids, de préférence de 50 à 65 % en poids.

3. Enveloppe ou feuille alimentaire pouvant être fumée, destinée à des emballages de produits alimentaires, selon la revendication 1, **caractérisée en ce que** la proportion de PVAL (alcool polyvinylique) est de 10 à 35 % en poids, de préférence de 15 à 25 % en poids.

4. Enveloppe ou feuille alimentaire pouvant être fumée, destinée à des emballages de produits alimentaires, selon la revendication 1, **caractérisée en ce que** la proportion de PEBA (amide à bloc de polyéther) est de 23 à 27 % en poids, de préférence de 24 à 26 % en poids.

5. Enveloppe ou feuille alimentaire pouvant être fumée, destinée à des emballages de produits alimentaires, selon l'une des revendications 1 à 4, **caractérisée en ce qu'**elle présente une perméabilité à la vapeur d'eau qui atteint en 24 h au moins 1 kg/m².

6. Enveloppe ou feuille alimentaire pouvant être fumée, destinée à des emballages de produits alimentaires, selon l'une des revendications 1 à 5, **caractérisée en ce qu'**elle présente une perméabilité à la vapeur d'eau qui atteint en 24 h moins de 100 kg/m².

7. Enveloppe ou feuille alimentaire pouvant être fumée, destinée à des emballages de produits alimentaires, selon l'une des revendications 1 à 6, **caractérisée en ce qu'**elle présente une perméabilité à la vapeur d'eau qui atteint en 24 h au moins 10 kg/m² à 50 kg/m², particulièrement préférentiellement entre 20 kg/m² et 30 kg/m².

8. Enveloppe ou feuille alimentaire pouvant être fumée, destinée à des emballages de produits alimentaires, selon l'une des revendications 1 à 7, **caractérisée en ce qu'**elle présente une perméabilité à l'oxygène qui est, en 24 h, inférieure à 2,1 cm³/m² pour une épaisseur de feuille de 30 µm.

9. Enveloppe ou feuille alimentaire pouvant être fumée, destinée à des emballages de produits alimentaires, selon l'une des revendications 1 à 8, **caractérisée en ce qu'**elle présente une perméabilité à l'oxygène qui se situe, en 24 h, dans une plage allant de 2,1 cm³/m² à 1,0 cm³/m², de préférence de 1,0 cm³/m² à 0,26 cm³/m², particulièrement préférentiellement à moins de 0,26 cm³/m² pour une épaisseur de feuille de 30 µm.

10. Enveloppe ou feuille alimentaire pouvant être fumée, destinée à des emballages de produits alimentaires, selon l'une des revendications 1 à 9, **caractérisée en ce que** les polyamides sont choisis dans un groupe comprenant : le polycaprolactame (PA 6), le polyhexaméthylène adipinamide (PA 66), le PA 6/66, le PA 11, le PA 12, le PA 6.12, le PA 6/12, le PA 6/69, le MXD6 (polyamide 6 modifié) ou des mélanges de ces polyamides ou similaires.

11. Enveloppe ou feuille alimentaire pouvant être fumée, destinée à des emballages de produits alimentaires, selon l'une des revendications 1 à 10, **caractérisée en ce que** l'enveloppe ou la feuille est monocouche ou multicouche.

12. Procédé de production d'enveloppes ou de feuilles alimentaires de forme plate ou tubulaire pouvant être fumées, destinées à des emballages de produits alimentaires, comme par exemple des enveloppes pour saucisses ou des sacs rétractables, à base de polymère, destiné à l'utilisation pour la fabrication de viandes ou de saucisses pouvant être fumées, où la chair à saucisse ou la viande est remplie avant le fumage dans l'enveloppe ou la feuille pouvant être fumée,
**caractérisé en ce que**
l'enveloppe ou la feuille alimentaire pouvant être fumée est formée dans un procédé d'extrusion par jet d'air à partir d'une fonte de plastique homogène issue d'un mélange de plastiques constitué au moins de PA (polyamide) avec du PVAL (alcool polyvinylique) et du PEBA (amide à bloc polyéther), où le mélange de plastiques est ajusté de manière à ce que celui-ci comprenne
- une proportion de PA (polyamide) ou un mélange de polyamides de 40 à 75 % en poids,
- une proportion de PVAL (alcool polyvinylique) de 5 à 40 % en poids, et
- une proportion de PEBA (amide à bloc polyéther) de 20 à 30 % en poids,
et où le mélange de plastique ne contient aucune charge, choisie dans le groupe constitué par l'amidon de maïs, la poudre de cellulose et les microbilles de verre.

13. Procédé selon la revendication 12, **caractérisé en ce que** le procédé d'extrusion par jet d'air est réalisé de sorte que l'enveloppe ou la feuille alimentaire présente une perméabilité à la vapeur en 24 h qui atteint au moins 1 kg/m² et qu'elle présente une perméabilité à l'oxygène qui est inférieure à 2,1 cm³/m² en 24 h pour une épaisseur de feuille de 30 µm.

14. Procédé selon la revendication 12 ou 13, **caractérisé en ce que** la chair à saucisse ou la viande pouvant être fumée dans l'enveloppe ou la feuille pouvant être fumée est fumée avec de la fumée naturelle ou de la fumée liquide.

15. Procédé selon l'une des revendications 12 à 14, **caractérisé en ce que** la chair à saucisse ou la viande pouvant être fumée dans l'enveloppe ou la feuille pouvant être fumée est séchée à l'air.
